(19) Europäisches Patentamt
European Patent Office
Office européen des brevets

(11) EP 2 426 160 B1

(12) EUROPÄISCHE PATENTSCHRIFT

(45) Veröffentlichungstag und Bekanntmachung des Hinweises auf die Patenterteilung:
**15.01.2014 Patentblatt 2014/03**

(21) Anmeldenummer: **10175189.9**

(22) Anmeldetag: **03.09.2010**

(51) Int Cl.:
***C08G 59/40*** (2006.01) ***C08G 59/42*** (2006.01)
***C08G 59/44*** (2006.01) ***C08G 59/46*** (2006.01)
***C08G 59/48*** (2006.01) ***C08J 9/02*** (2006.01)

(54) **Hitzehärtende Epoxidharzzusammensetzung mit Wasser als Treibmittel**

Heat curable epoxy resin composition with water as foaming agent

Composition de résine époxy durcissant à la chaleur dotée d'eau comme agent moteur

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**07.03.2012 Patentblatt 2012/10**

(73) Patentinhaber: **Sika Technology AG**
**6340 Baar (CH)**

(72) Erfinder:
- **Finter, Jürgen**
**8037, Zürich (CH)**
- **Jendoubi, Elyes**
**8050, Zürich (CH)**

(74) Vertreter: **Sika Patent Attorneys**
**c/o Sika Technology AG**
**Tüffenwies 16-22**
**8048 Zürich (CH)**

(56) Entgegenhaltungen:
**EP-A1- 0 276 526**
**EP-A1- 2 182 025**
**EP-A2- 0 469 550**
**WO-A1-2007/004184**
**US-A- 3 655 818**
**US-A- 5 013 791**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 426 160 B1

## Beschreibung

### Technisches Gebiet

Die vorliegende Erfindung betrifft das Gebiet der hitzehärtenden Epoxidharzzusammensetzungen sowie deren Verwendung insbesondere im Fahrzeugbau und Sandwichpanelbau.

### Stand der Technik

Hitzehärtende Epoxidharzzusammensetzungen werden schon länger als Klebstoffe im Rohbau sowie in Verstärkungselementen bzw. Strukturschäumen eingesetzt.

Ein wichtiges Einsatzgebiet von hitzehärtenden Epoxidharzzusammensetzungen findet sich so im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.

Verstärkungselemente, welche eine hitzehärtende Epoxidharzzusammensetzung aufweisen, die unter Hitzeeinwirkung einen Strukturschaum bildet, sind beispielsweise unter dem Handelsnamen SikaReinforcer® bekannt. US 6,387,470 B1 offenbart beispielsweise eine hitzehärtende und schäumbare Dichtmasse, welche eine Mischung von Epoxid-Flüssigharz und Epoxid-Festharz in Gegenwart von 5 - 20 Gew.-% eines Thermoplasten wie Polystyrol und 30 - 45 Gew.-% eines thermoplastischen Elastomers wie SBS-Blockcopolymers enthält. Die Mechanik, insbesondere die Glasübergangstemperatur, und Hafteigenschaften von derartigen Zusammensetzungen werden jedoch aufgrund des hohen Anteils an SBS-Blockcopolymer stark verschlechtert.

Damit eine schnelle Härtung erfolgen kann, werden neben hitzeaktivierbaren Härtern für Epoxidharze üblicherweise Beschleuniger verwendet. Eine wichtige Kategorie von Beschleunigern sind Harnstoffe. Hitzehärtende Epoxidharzzusammensetzungen, welche Harnstoffe als Beschleuniger aufweisen können, sind beispielsweise aus WO2004/106402 A2 und WO2004/055092 A1 bekannt.

Die Schäumung der Epoxidharzzusammensetzungen erfolgt gewöhnlich durch chemische Treibmittel, in der Regel organische Azoverbindungen, die sich in der Hitze zersetzen oder durch expandierbare Polymerhohlkugeln, die mit einer leicht siedenden organischen Verbindung gefüllt sind. Erstere liefern durch die Zersetzungsreaktion in erster Linie Stickstoff, als Nebenprodukt bildet sich je nach Bedingungen toxisches Ammoniak. Expandierbare Polymerhohlkugeln wiederum sind mit leicht entflammbaren Kohlenwasserstoffen gefüllt, weswegen Lagerung und Transport besonderen Vorschriften unterliegen. Derartige chemische Treibmittel sind unter den Handelsnamen Expancel® der Firma Akzo Nobel oder Celogen® der Firma Chemtura oder Luvopor® der Firma Lehmann & Voss, Deutschland, bekannt.

In der Literatur ist daneben auch Kohlendioxid beschrieben, das durch Umsetzung von Kreide ($CaCO_3$) mit Phosphorsäure in einer Polymermatrix erzeugt wird. Ein derartiges Verfahren ist aber nur mit zweikomponentigen Epoxidharzzusammensetzungen möglich und scheidet insofern für (einkomponentige) hitzehärtende Epoxidharzzusammensetzungen aus.

### Darstellung der Erfindung

Aufgabe der vorliegenden Erfindung ist es daher, hitzehärtende Epoxidharzzusammensetzungen zur Verfügung zu stellen, welche einerseits eine gute Lagerstabilität bei Raumtemperatur sowie gute mechanische, thermische und Haftungseigenschaften aufweisen, und andererseits ein untoxisches und keinen Transport- und Lagerungsvorschriften unterliegendes Treibmittel zur Erzeugung von Strukturschäumen bereitstellen.

Diese Aufgabe konnte überraschenderweise durch eine hitzehärtende Epoxidharzzusammensetzung gemäss Anspruch 1 gelöst werden. Diese Epoxidharzzusammensetzung lässt sich besonders gut als einkomponentiger, bei Raumtemperatur fester, hitzehärtender Klebstoff, insbesondere als hitzehärtender einkomponentiger Rohbauklebstoff im Fahrzeugbau, sowie zur Herstellung eines Strukturschaums für die Verstärkung von Hohlräumen, insbesondere von metallischen Strukturen, verwenden.

Völlig überraschend wurde weiterhin gefunden, dass die erfindungsgemäße hitzehärtende Epoxidharzzusammensetzung unter den üblichen für die Hitzehärtung verwendeten Temperaturbedingungen zur Ausbildung eines Schaums mit hoher mechanischer Festigkeit, hoher Glasfestigkeit und gutem Haftvermögen auf metallischen und nichtmetallischen Untergründen führt, wobei gleichzeitig auf die Verwendung der bekannten toxischen oder leicht entflammbaren Treibmittel vollständig verzichtet werden kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

**Wege zur Ausführung der Erfindung**

Die vorliegende Erfindung betrifft eine hitzehärtende Epoxidharzzusammensetzung, welche

- mindestens ein Epoxid-Festharz **A1** mit durchschnittlich mehr als einer Epoxidgruppe pro Molekül;
- gegebenenfalls mindestens ein Epoxid-Flüssigharz **A2** mit durchschnittlich mehr als einer Epoxidgruppe pro Molekül;
- mindestens einen Härter **B** für Epoxidharze, welcher durch erhöhte Temperatur aktiviert wird;
- mindestens eine Carbonsäure **C;**
- mindestens ein Hydroxyalkylamid oder Hydroxyalkylharnstoff **H;** und
- mindestens einen Beschleuniger **E** auf Basis eines Harnstoffderivates zur Aktivierung der Umsetzung der Komponenten **A1,** und gegebenenfalls **A2** mit **B,** enthält.

Die erfindungsgemäße Epoxidharzzusammensetzung weist die Bestandteile **A1, B** und gegebenenfalls **A2** auf, die bei Temperaturerhöhung über eine Vernetzungsreaktion zur Bildung einer Epoxidharzmatrix führen. Weiterhin weist die erfindungsgemäße Epoxidharzzusammensetzung eine Carbonsäure **C** und ein Hydroxyalkylamid oder Hydroxyalkylharnstoff **H** auf, die bei Temperaturerhöhung miteinander reagieren und durch eine Kondensationsreaktion Wasser bereitstellen, das unter den gegebenen Temperaturbedingungen (Dampfform) hervorragend als Treibmittel geeignet ist.

Jedoch führt die Reaktion dieser Bestandteile alleine nicht zur Ausbildung eines Strukturschaums mit den gewünschten Eigenschaften. Bei den üblicherweise eingesetzten Temperaturen (100°C - 220°C) ist die Viskosität der Epoxidharzmatrix nur gering, wodurch der durch die Kondensationsreaktion erzeugte Wasserdampf in einem relevanten Umfang ausdiffundiert und so als Treibmittel nicht mehr zur Verfügung steht. Dies würde die Schaumbildung und -qualität negativ beeinflussen und letztendlich das Konzept der Nutzung von Wasser als Treibmittel zunichte machen.

Mit der vorliegenden Erfindung wurde dieses Problem überwunden. Durch Zusetzen eines Beschleunigers **E** auf Basis eines Harnstoffderivates wird die Umsetzung der Komponenten **A1, A2** und **B** aktiviert, so dass die Reaktion zur Bildung der Epoxidharzmatrix beschleunigt wird. Durch Zusetzen des Beschleunigers **E** kommt es zu einer Absenkung der Onset-Temperatur der Umsetzungsreaktion und damit verbunden zu einer Viskositätserhöhung der Epoxidharzmatrix, was wiederum das Ausdiffundieren des durch Kondensationsreaktion entstehenden Wassers erschwert oder sogar verhindert.

Die hitzehärtende Epoxidharzzusammensetzung enthält Epoxidharze mit durchschnittlich mehr als einer Epoxidgruppe pro Molekül. Die Epoxidgruppe liegt vorzugsweise als Glycidylethergruppe vor. Diese Epoxidharze sind ein Gemisch aus mindestens einem Epoxid-Festharz **A1** und gegebenenfalls mindestens einem Epoxid-Flüssigharz **A2,** jeweils mit durchschnittlich mehr als einer Epoxidgruppe pro Molekül.

Die Glastemperatur von Festharzen liegt über Raumtemperatur, d.h. sie lassen sich bei Raumtemperatur zu schüttfähigen Partikel zerkleinern.

Bevorzugte Epoxid-Festharze weisen die Formel (A-I) auf

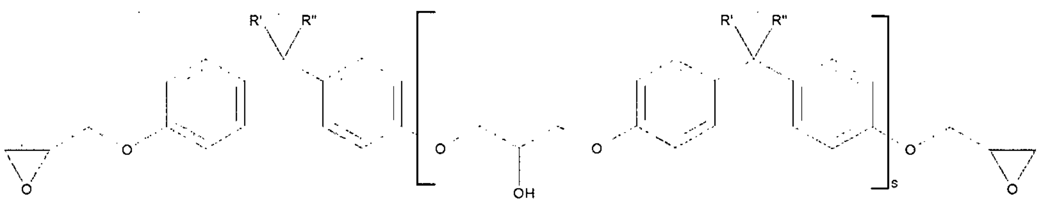

(A-I)

Hierbei stehen die Substituenten R' und R" unabhängig voneinander entweder für H oder $CH_3$.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (A-I) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze **A2** weisen die Formel (A-II) auf

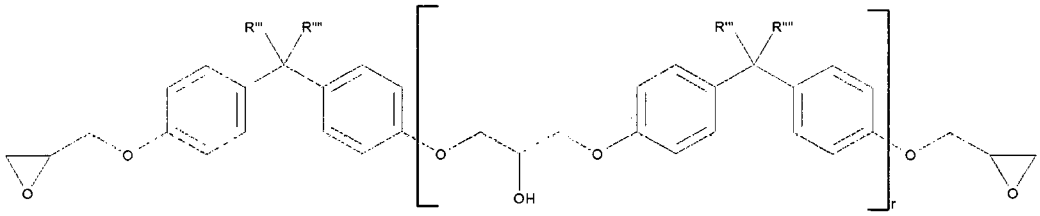

(A-II)

Hierbei stehen die Substituenten R'" und R"" unabhängig voneinander entweder für H oder $CH_3$. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ‚A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet sind sogenannte Novolake. Diese weisen insbesondere die folgende Formel auf:

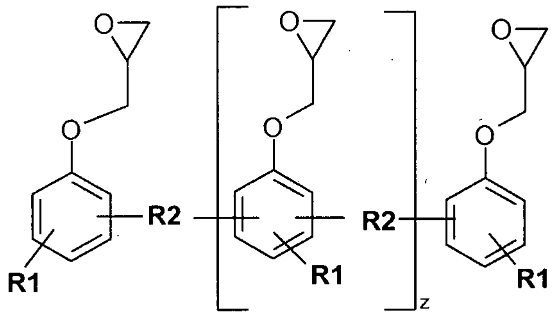

mit **R2**=

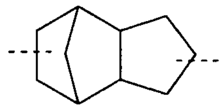

oder $CH_2$, **R1** = H oder Methyl und z = 0 bis 7.

Insbesondere handelt es sich hierbei um Phenol- oder Kresol-Novolake (**R2** = $CH_2$).

Solche Epoxidharze sind unter dem Handelnamen EPN oder ECN sowie Tactix®556 von Huntsman oder unter der Produktereihe D.E.N.™ von Dow Chemical kommerziell erhältlich.

Erfindungsgemäß enthält die hitzehärtende Epoxidharzzusammensetzung mindestens ein Epoxid-Festharz **A1,** als auch gegebenenfalls mindestens ein Epoxid-Flüssigharz **A2.**

Der Anteil der Epoxidharzmischung **A1** und **A2** beträgt hierbei vorzugsweise 10 - 85 Gew.-%, insbesondere 15 - 70 Gew.-%, bevorzugt 15 - 60 Gew.-%, am Gesamtgewicht der erfindungsgemäßen Epoxidharzzusammensetzung.

In einer Ausführungsform ist der Härter **B** ein latenter Härter, welcher ausgewählt ist aus der Gruppe bestehend aus Dicyandiamid, Guanimin, Guanidin, Aminoguanidin und deren Derivaten sowie aromatischen oder aliphatischen Carbonsäurehydraziden. Als "latente Härter" werden bei niedrigen Temperaturen, beispielsweise Raumtemperatur, unreaktive Systeme bezeichnet, bei höheren Temperaturen reagieren sie mit dem Epoxidharzbestandteil zum Polymer.

Der latente Härter **B** ist insbesondere bei einer Temperatur von 100 - 220 °C, insbesondere von 120 - 200°C, bevorzugt zwischen 160 und 190°C, aktivierbar.

Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.

In einer Ausführungsform ist der Beschleuniger **E** ausgewählt aus der Gruppe der substituierten Harnstoffe, insbesondere 3-(3-Chlor-4-methylphenyl)-1, 1-dimethylharnstoff (Chlortoluron), oder Phenyl-Dimethylharnstoffen, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis (3,3'-dimethylharnstoff).

Allgemein kann der Beschleuniger E die Formel (I)

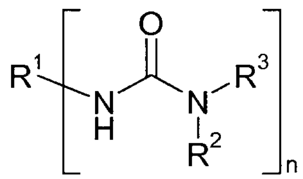

(I)

aufweisen.

In Formel (I) steht für den Beschleuniger **E** $R^1$ für H oder einen n-wertigen aliphatischen, cycloaliphatischen, araliphatischen, aromatischen oder heteroaromatischen Rest.

Weiterhin stehen $R^2$ und $R^3$

je unabhängig voneinander für eine Alkylgruppe oder Aralkylgruppe, insbesondere für eine Alkylgruppe oder Aralkylgruppe mit weniger als 19 C-Atomen;

oder

zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist.

Schliesslich steht n für einen Wert von 1 bis 4, insbesondere für 1 oder 2.

Der Begriff "unabhängig voneinander" in der Definition von Gruppen und Resten bedeutet, dass mehrere vorkommende, aber in den Formeln gleich bezeichnete Gruppen jeweils unterschiedliche Bedeutungen aufweisen können.

Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Falls $R^1$ nicht für H steht, kann $R^1$ - wie oben beschrieben - für einen n-wertigen aliphatischen, cycloaliphatischen, araliphatischen, aromatischen oder heteroaromatischen Rest stehen. D.h. der Beschleuniger **E** weist beispielsweise die Formel (I') auf.

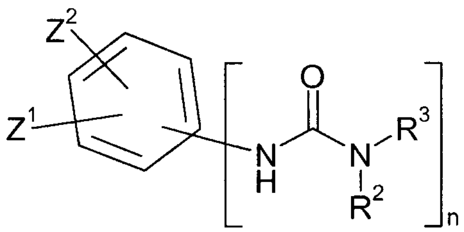

(I')

wobei $Z^1$ und $Z^2$ für H, ein Halogenatom oder einen beliebigen organischen Rest, insbesondere für eine Arylgruppe oder für eine Alkylgruppe mit 1 bis 8, bevorzugt 1 bis 6, C-Atomen, stehen.

Der Beschleuniger **E** ist insbesondere das Produkt der Umsetzung eines aromatischen monomeren Diisocyanats mit einer aliphatischen Aminverbindung, insbesondere von 4,4'-Diphenyl-methylen-diisocyanat mit Dimethylamin.

Als besonders bevorzugte Beispiele für den Beschleuniger **E**, wobei $R^1$ für einen aromatischen Rest steht, seien

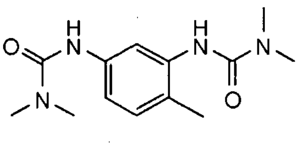

DYHARD® UR 500

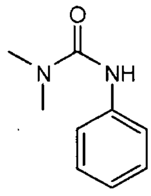

DYHARD® UR 300

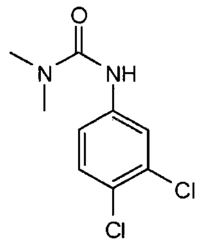

DYHARD® UR 200

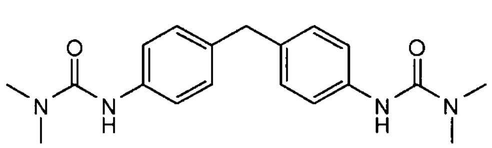

OMICURE® U52

genannt.

$R^1$ kann insbesondere auch für einen Rest eines aliphatischen, cycloaliphatischen, araliphatischen, aromatischen oder heteroaromatischen Mono-, Di-, Tri- oder Tetraisocyanates der Formel (11) nach Entfernung der n Isocyanatgruppen stehen.

$$R^1[NCO]_n \qquad (II)$$

Dieses Mono- Di- Tri- oder Tetraisocyanat der Formel (II) ist entweder ein monomeres Mono-, Di-, Tri- oder Tetraisocyanat oder ein Dimer oder Oligomer eines oder mehrerer monomeren Di- oder Triisocyanates, wobei als Dimer oder Oligomer insbesondere Biurete, Isocyanurate und Uretdione gelten.

Geeignete monomere Monoisocyanate sind Alkylisocyanate, wie beispielsweise Butylisocyanat, Pentylisocyanat, Hexylisocyanat, Octylisocyanat, Decylisocyanat und Dodecylisocyanat, sowie Cyclohexylisocyanat, Methylcyclohexylisocyanat sowie Benzylisocyanat.

Besonders geeignete monomere Diisocyanate sind 1,4-Butandiisocyanat, Hexamethylendiisocyanat (HDI), Isophorondiisocyanat (IPDI), Trimethylhexamethylendiisocyanat (TMDI), 2,5- oder 2,6-Bis-(isocyanatomethyl)-bicyc-lo [2.2.1] heptan, Dicyclohexylmethyldiisocyanat ($H_{12}$MDI), m-Tetramethylxylylen diisocyanat (TMXDI) und m-Xylylendiisocyanat (XDI) und hydriertes m-Xylylendiisocanat ($H_8$XDI).

Besonders geeignete Dimere oder Oligomere sind HDI-Biuret, HDI-Isocyanurat, IPDI-Biuret, IPDI-Isocyanurat, HDI-Diuretdion, IPDI-Isocyanurat,

Derartige Dimere oder Oligomere sind kommerziell beispielsweise erhältlich als Desmodur N-100 (Bayer), Luxate HDB 9000 (Lyondell), Desmodur N-3300 (Bayer), Desmodur N-3600 (Bayer), Luxate HT 2000 (Lyondell), Desmodur N-3400 (Bayer), Luxate HD 100 (Lyondell), Desmodur Z 4470 (Bayer), Vestanat T 1890/100 (Hüls) oder Luxate IT 1070 (Lyondell).

Selbstverständlich können auch geeignete Mischungen von den genannten Di- oder Triisocyanaten eingesetzt werden.

$R^2$ und $R^3$ bilden zusammen besonders geeignet eine Butylen-, Pentamethylen- oder Hexamethylengruppe, vorzugsweise eine Pentamethylengruppe.

Bevorzugt stehen $R^2$ und $R^3$ unabhängig von einander je für eine Alkylgruppe mit 1 bis 5 Kohlenstoffatomen, insbesondere je unabhängig von einander je für eine Methyl-, Ethyl- oder Propyl-Gruppe, vorzugsweise je für eine Methylgruppe.

$R^1$ steht in einer Ausführungsform für H. Dies ist bevorzugt in dem Fall, wo $R^2$ und $R^3$ unabhängig von einander

je für eine Methyl-, Ethyl- oder Propyl-Gruppe, vorzugsweise je für je für eine Methylgruppe, stehen.

Die Beschleuniger **E** der Formel (I) sind synthetisch leicht aus der Reaktion eines aliphatischen, cycloaliphatischen, araliphatischen, aromatischen oder heteroaromatischen Mono-, Di-, Tri- oder Tetraisocyanates der Formel (II) mit einem sekundären Amin der Formel (III) zugänglich.

$R^1[NCO]_n$ (II)

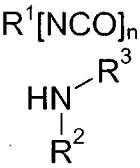

(III)

In einer zweiten Variante der Synthese wird der Beschleuniger E der Formel (I) aus der Reaktion eines primären aliphatischen, cycloaliphatischen, araliphatischen, aromatischen oder heteroaromatischen Amines der Formel (IV) und einer Verbindung der Formel (V) hergestellt.

$R^1[NH_2]_n$ (IV)

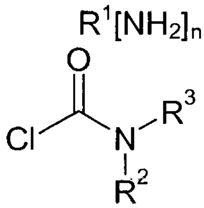

(V)

Letztere Variante ist insbesondere dann vorteilhaft, wenn Polyisocyanate der Formel (II) kommerziell nicht oder nur schwer erhältlich sind.

Der Beschleuniger **E** weist insbesondere ein Molekulargewicht von weniger als 1000 g/mol, insbesondere zwischen 80 und 800 g/mol auf. Ist das Molekulargewicht grösser ist die Beschleunigungswirkung reduziert und die notwendige Einsatzmenge ist bedeutend höher, was wiederum zu schlechter Mechanik führen kann.

Die Menge des Beschleunigers **E** beträgt vorteilhaft 0.3 - 5.0 Gew.-%, bevorzugt 1.0 - 3.0 Gew.-% am Gesamtgewicht der Zusammensetzung.

Im Allgemeinen sollte der Anteil des Beschleunigers **E** so gewählt sein, dass die Onset-Temperatur der Reaktion zwischen Epoxid-Festharz **A1,** gegebenenfalls Epoxid-Flüssigharz **A2** und Härter **B,** gemessen durch DSC, um 35 bis 60°C gesenkt wird. Genauer gesagt liegt die Onset-Temperatur der Reaktion nach Zusetzen einer geeigneten Menge des Beschleunigers **E** um 35 bis 60°C niedriger als die Onset-Temperatur des Ansatzes ohne Zusatz des Beschleunigers **E.** Für die Bestimmung der Onset-Temperatur wird für das vorliegende Dokument die jeweilige Probe stets im DSC-Gerät mit einer Aufheizrate von 10 K/min gemessen. Als Onset-Temperatur wird hierbei jeweils aus dem Schnittpunkt der Tangente an die Basislinie und der Tangente an den Anstieg des Reaktionspeaks bestimmt.

Dadurch wird sichergestellt, dass die Reaktion dieser Bestandteile rasch genug abläuft, wodurch eine ausreichend hohe Viskosität des Ansatzes gewährleistet wird, bevor durch die Umsetzung des Hydroxyalkylamid oder Hydroxyalkylharnstoff **H** mit der Carbonsäure **C** Wasser als Treibmittel freigesetzt wird. Hierdurch wird das Ausdiffundieren des Treibmittels in größerem Umfang vermieden.

In einer Ausführungsform ist die Carbonsäure **C** aus einer Di- oder Tricarbonsäure, oder einem amorphen mindestens difunktionellen Polymer, beispielsweise Polyester, mit Carboxylendgruppen und einem Molekulargewicht zwischen ungefähr 1'600 g/mol and ungefähr 5'000 g/mol ausgewählt. Derartige amorphe Polyester werden beispielsweise hergestellt, indem zunächst Benzoldicarbonsäure und aliphatische Dicarbonsäuren wie Adipin- oder Sebacinsäure mit Diolen wie Butandiol oder Ethylenglykol zu einem difunktionellen Polyester mit Hydroxylendgruppen kondensiert werden und anschliessend mit Phthalsäureanhydrid oder Trimellitsäureanhydrid zu einem sogenannten sauren Polyester umgesetzt werden. Sie sind kommerziell erhältlich, z. B. als Crylcoat® 1540 von Cytec (Tg 58°C, Säurezahl 71, entspricht einem Molekulargewicht von 1600 Dalton) oder Crylcoat® 1660 (Tg 50°C, Säurezahl 48, entspricht einem Molekulargewicht von 2330 Dalton) oder Uralac® P 2200 von DSM (Tg 50°C, Säurezahl 51, entspricht einem Molekulargewicht von 2200 Dalton).

Bevorzugte Beispiele für die Dicarbonsäure sind Bernsteinsäure, Adipinsäure, Sebacinsäure, Glutarsäure und Benzoldicarbonsäure.

Die hitzehärtende Epoxidharzzusammensetzung enthält mindestens ein Hydroxyalkylamid oder Hydroxyalkylharnstoff **H**. Ein Hydroxyalkylamid weist die chemische Gruppierung der Formel (VI) auf. Ein Hydroxyalkylharnstoff weist die chemische Gruppierung der Formel (VII) auf.

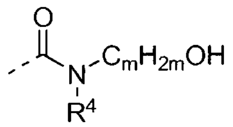 (VI)

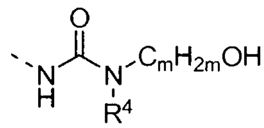 (VII)

Hierbei ist steht m für einen Wert von 2 bis 6, insbesondere von 2, und $R^4$ steht für H oder eine Alkylgruppe mit 1 bis 5 Kohlenstoffatomen oder für eine Hydroxyalkylgruppe der Formel $C_mH_{2m}OH$.

Aufgrund ihrer hohen Ähnlichkeit sind die Gruppierungen der Formel (VI) und (VII) ähnlich gut für die vorliegende Erfindung gebrauchbar, obwohl sie chemisch zu unterschiedlichen Klassen gehören.

In einer bevorzugten Ausführungsform ist das Hydroxyalkylamid oder Hydroxyalkylharnstoff **H** ein Hydroxyalkylamid **H** der Formel (VIII).

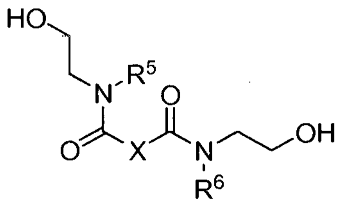 (VIII)

Hierbei steht X für eine Phenylengruppe oder für $-(CH_2)_n-$ mit n = 1-7 und $R^5$ und $R^6$ stehen jeweils unabhängig voneinander für H oder eine Alkylgruppe mit 1 bis 5 Kohlenstoffatomen oder für $-CH_2CH_2-OH$.

Falls $R^5$ und $R^6$ Alkylgruppen sind, weisen diese 1 bis 5 Kohlenstoffatome auf, insbesondere sind $R^5$ und $R^6$ dann unabhängig voneinander je eine Methyl-, Ethyl- oder Propyl-Gruppe, vorzugsweise eine Methylgruppe.

Ein bevorzugtes Beispiel für das Hydroxyalkylamid **H** ist N, N, N', N'-tetrakis(2-hydroxyethyl)adipamid, das unter der Marke Primid® von EMS-Chemie erhältlich ist. Hierbei ist in der obigen Formel (VIII) $R^5$ und $R^6$ jeweils $-CH_2CH_2-OH$ und X steht für eine Butylen-Gruppe.

In einer weiteren Ausführungsform ist das Hydroxyalkylamid oder Hydroxyalkylharnstoff **H** ein Hydroxyalkylharnstoff **H** der Formel (IX).

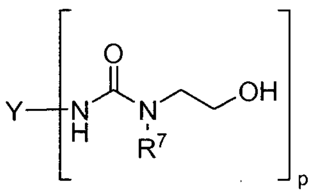 (IX)

Hierbei steht p für 2 oder 3 und Y für einen n-wertigen Rest mit 4 bis 12 C-Atomen und $R^7$ steht für H oder eine Alkylgruppe mit 1 bis 5 Kohlenstoffatomen oder für $-CH_2CH_2-OH$.

Y steht insbesondere für einen Rest $R^1$, wie er bereits beim Beschleuniger E der Formel (I) definiert wurde. Besonders bevorzugt steht Y für den Rest eines Isophorondiisocyanates nach Entfernung der zwei NCO Gruppen.

Derartige Hydroxyalkylharnstoffe **H** können aus Isocyanaten und Aminen gewonnen werden. Dies wird an einer besonders bevorzugten Ausführungsform eines Hydroxyalkylharnstoffes **H** wie folgt illustriert:

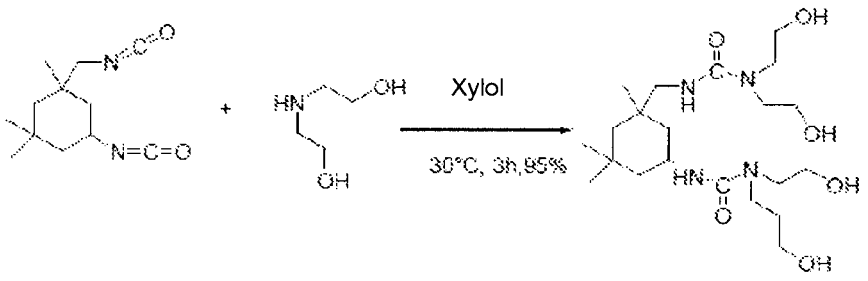


Meist bevorzugt ist das Hydroxyalkylamid oder Hydroxyalkylharnstoff **H** ein Hydroxyalkylamid.

Es wird angenommen, dass Hydroxyalkylamid oder Hydroxyalkylharnstoff **H** und Carbonsäure **C** mit dem Epoxidharz ein interpenetrierendes Netzwerk bilden, das teilweise über Carboxylgruppen an die Epoxidharzmatrix gebunden sein kann. Die Konzentration des Polymers, beispielsweise Polyesters, mit Carboxylendgruppen oder der Carbonsäure muss daher immer unter der Konzentration der Epoxidkomponente liegen, um die Glastemperatur der Zusammensetzung nicht zu stark abzusenken.

Wie bereits oben ausgeführt wurde sollte der Anteil des Beschleunigers **E** so gewählt sein, dass die Onset-Temperatur der Reaktion zwischen Epoxid-Festharz **A1,** Epoxid-Flüssigharz **A2** und Härter **B,** gemessen durch DSC, deutlich gesenkt wird. Hierdurch soll sichergestellt werden, dass die Reaktion dieser Bestandteile rasch genug abläuft und dadurch eine ausreichend hohe Viskosität des Ansatzes gewährleistet wird.

Um dies mit Sicherheit zu gewährleisten, ist der Anteil des Beschleunigers **E** so gewählt, dass die Onset-Temperatur der Reaktion von Hydroxyalkylamid oder Hydroxyalkylharnstoff **H** mit Carbonsäure **C,** gemessen durch DSC, bevorzugt um wenigstens 20°C höher ist als die Onset-Temperatur der Reaktion zwischen Epoxid-Festharz **A1,** Epoxid-Flüssigharz **A2** und Härter **B.**

Die Zusammensetzungen lassen sich aufschmelzen und bei erhöhter Temperatur, jedoch unterhalb der Aktivierungstemperatur des Härters, einfach umformen. Aufgrund der Besonderheit, dass die hitzehärtenden Epoxidharzzusammensetzungen bei Raumtemperatur üblicherweise fest sind und über eine klebfreie Oberfläche verfügen, eignen sie sich bestens für die Herstellung von Verstärkungselementen. Derartige Verstärkungselemente sind bei Raumtemperatur formstabil und einfach lagerbar.

In einer weiteren Ausführungsform enthält die Zusammensetzung zusätzlich mindestens einen Füllstoff **F.** Bevorzugt handelt es sich hierbei um **Russ,** Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 2 - 50 Gewichts-%, vorzugsweise 3 - 35 Gewichts-%, insbesondere 5 - 25 Gewichts-%, bezogen auf das Gewicht der gesamten Zusammensetzung.

In einer weiteren Ausführungsform kann, wenn beispielsweise höhere Expansionen erwünscht sind, die Zusammensetzung zusätzlich ein chemisches Treibmittel **T** enthalten, wie es beispielsweise unter dem Handelsnamen Expancel® der Firma Akzo Nobel oder Celogen® der Firma Chemtura oder Luvopor® der Firma Lehmann & Voss, Deutschland, erhältlich ist. Der Anteil des Treibmittels **T** beträgt vorteilhaft 0.1 - 1.0 Gew.-%, bezogen auf das Gewicht der Zusammensetzung.

Vorzugsweise jedoch enthält die erfindungsgemäße Zusammensetzung alleine Wasser als Treibmittel und keine weiteren chemischen Treibmittel.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente, umfassen.

Es hat sich gezeigt, dass sich die beschriebenen hitzehärtenden Epoxidharzzusammensetzungen besonders als einkomponentige feste Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die auch zusätzlich mit üblichen Schlagzähmodifikatoren wie CoreShell Partikeln schlagzäh modifiziert werden können. Derartige CoreShell Partikel sind beispielsweise unter dem Namen Paraloid® von Rohm und Haas oder als MX120® von Kaneka erhältlich.

Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Besonders hitzestabile Kunststoffe sind weiterhin Polysulfone oder Polyethersulfone,

Bevorzugt ist die Anwendung, bei der zumindest ein Material ein Metall ist. Insbesondere handelt es sich beim Metall um ein Metall, welches durch eine kathodische Tauchlackierung (KTL) beschichtet worden ist.

Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft deshalb ein Verfahren zur Verklebung von hitzestabilen Substraten, welches die Schritte umfasst:

i) Applizieren einer hitzehärtenden Epoxidharzzusammensetzung, wie sie vorgängig im Detail beschrieben wurde, auf die Oberfläche eines hitzestabilen Substrates **S1**, insbesondere eines Metalls;

ii) Kontaktieren der applizierten hitzehärtenden Epoxidharzzusammensetzung mit der Oberfläche eines weiteren hitzestabilen Substrates **S2,** insbesondere eines Metalls;

iii) Erhitzen der hitzehärtenden Epoxidharzzusammensetzung auf eine Temperatur von 100 - 220 °C, insbesondere von 120 - 200°C, bevorzugt zwischen 160 und 190°C;

wobei das Substrat **S2** aus dem gleichen oder einem unterschiedlichen Material wie das Substrat **S1** besteht.

Die hitzestabilen Substrates **S1** und **S2** sind insbesondere die bereits vorgängig erwähnten hitzestabilen Materialien.

Aus einem derartigen Verfahren zum Verkleben von hitzestabilen Materialien resultiert ein verklebter Artikel. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender Rohbauklebstoff im Fahrzeugbau.

Eine weiterhin besonders bevorzugte Verwendung der erfindungsgemässen hitzehärtenden Epoxidharzzusammensetzung ist dessen Verwendung zum Verkleben oder Verstärken von Metallstrukturen oder verstärkendes Verfüllen von Hohlräumen im Fahrzeugbau oder Sandwichpanelbau.

Die hitzehärtende Epoxidharzzusammensetzung kann insbesondere auf einem Träger aufgebracht werden. Derartige Träger sind insbesondere aus einem hitzestabilen Material, wie sie vorgängig bereits als hitzestabile Substarte **S1** erwähnt wurden. Die hitzehärtende Epoxidharzzusammensetzung wird hierbei im geschmolzenen Zustand auf das Trägermittel aufgebracht.

Es lassen sich somit Verstärkungselemente für die Verstärkung von metallischen Strukturen aufweisend einen Träger, auf welchem eine beschriebene hitzehärtende Epoxidharzzusammensetzung aufgebracht ist, einfach realisieren.

Diese Verstärkungselemente werden auf der zu verstärkenden metallischen Struktur fixiert oder in einen Hohlraum der zu verstärkenden metallischen Struktur fixiert. Das Fixieren kann hierbei durch ein Fixiermittel wie durch einen Clip, eine Schraube, einen Haken, eine Niete, eine Schraube, eine Nut oder einen Klebstoff erfolgen oder aber es kann durch geeignete Geometrie der Struktur, welche ein Einklemmen ermöglichen, erfolgen. Somit ist es bevorzugt, dass der Träger ein derartiges Fixierungsmittel aufweist. Insbesondere ist es bevorzugt, wenn die zu verstärkende Struktur ein zum Fixierungsmittel korrespondierendes Gegenstück aufweist, wie zum Beispiel eine vorspringende Kante/Haken oder Schraube/Schraubgewinde.

Ein weiterer Aspekt der vorliegenden Erfindung betrifft somit eine ausgehärtete Epoxidharzzusammensetzung, welche erhalten wird durch das Erhitzen einer vorgängig im Detail beschriebenen hitzehärtenden Epoxidharzzusammensetzung auf eine Temperatur von 100 - 220 °C, vorzugsweise 120 - 200°C.

Insbesondere betrifft ein weiterer Aspekt der vorliegenden Erfindung einen Strukturschaum, welcher durch Erhitzen aus einer bereits beschriebenen hitzehärtenden Epoxidharzzusammensetzung, erhalten wird.

Ein Strukturschaum weist die wesentlichen Eigenschaften auf, dass er einerseits beim Erhitzen aufgeschäumt wird und andererseits durch die chemische Aushärtung der Zusammensetzung in der Lage ist, grosse Kräfte zu übertragen und somit eine Struktur, typischerweise eine metallische Struktur, zu verstärken. Typischerweise werden derartige Strukturschäume in Hohlräumen von metallischen Strukturen eingesetzt. Sie können insbesondere auch als Bestandteil in den vorgängig beschriebenen Verstärkungselementen eingesetzt werden.

Beispielsweise können sie in den Hohlräumen von Tragsäulen einer Verkehrsmittel-Karosserie angebracht werden. Durch den Träger wird dieses Verstärkungselement am gewünschten Ort gehalten. Die Einbringung des Verstärkungselementes erfolgt üblicherweise im Rohbau, d.h. beim Bau der Karosserie. Die Karosserie gelangt nach dem Durchlaufen eines KTL-Bades in einen KTL-Ofen, wo bei einer Temperatur von typischerweise 160 bis 190 °C der KTL-Lack eingebrannt wird. Der bei diesen Temperaturen gebildete Wasserdampf führt als Treibmittel zur Bildung eines Schaums und die hitzehärtende Zusammensetzung reagiert hierbei chemisch unter Vernetzung, was zur Aushärtung des Klebstoffes führt.

Diese Verstärkungselemente werden deshalb häufig an Orten eingesetzt, bei welchen es nach der Montage aufgrund der Form und/oder des engen Ausmasses solcher Hohlräume vielfach schwierig ist, diese effizient zu verstärken, abzudichten oder die Geräuschübertragung einzudämmen.

Dank dieser Strukturschäume ist es möglich, trotz geringerem Gewicht hohe Festigkeiten und dichte Strukturen zu erhalten. Zudem ist es möglich, durch die verfüllende und abdichtende Funktion des Strukturschaums auch den Innenraum von Hohlräumen abzuschotten und dadurch die Fahrgeräusche und Vibrationen markant zu reduzieren.

Insbesondere ist es jedoch durch die vorliegende Erfindung gelungen, Strukturschäume mit hervorragenden Eigenschaften bereitzustellen, die durch Verwendung eines untoxischen und nicht entflammbaren Treibmittels, Wasser, erzeugt werden.

**Beispiele**

Herstellung der Beispiele ***1*** - ***8***

Tabelle 1. Eingesetzte Rohstoffe

| Hersteller | Bezeichnung | Molekulargewicht (g/mol) | Funktionalität |
|---|---|---|---|
| Huntsman | Araldite® GT 7004, Epoxidfestharz auf Basis Bisphenol-A | 1470 | 2 |
| Cytec | Crylcoat® 1680, amorpher Polyester mit Carbonsäure-endgruppen | 2334 | 2 |
| Cytec | Crylcoat® 1506-0, amorpher Polyester mit Carbonsäure-endgruppen | 1600 | 2 |
| EMS-Chemie | Primid® XL 552, Hydroxyalkylamid | 320 | 4 |
| Degussa | Dicyandiamid | 84 | 6 |
| Degussa | Aerosil® R202, pyrogene Kieselsäure | | |
| Lanxess | GF 3mm, Glasfasern 3mm | | |
| Omya | Omyacarb®, gefällte Kreide (Calciumcarbonat) | | |
| Degussa | Dyhard® UR500 (Dimethylharnstoffderivat) | | |

Die Komponenten wurden entsprechend der in Tabelle 2 angegebenen Zusammensetzungen zuerst in einen Mixer vorgemischt und dann in einem 2 Schneckenextruder (L/D 24) bei 95 °C extrudiert. Beispiele ***1*** und ***2*** sind Vergleichsbeispiele, Beispiele ***3*** - ***8*** geben Versuche mit den erfindungsgemäßen Zusammensetzungen wider.

Das feste Extrudat wurde zu 2 mm dicken Platten gepresst. Aus diesen Platten wurden Prüfkörper hergestellt und charakterisiert. Die Resultate sind in Tabelle 2 dargestellt.

**Prüfmethoden:**

*Glasübergangstemperatur ($T_g$)*

Die Glasübergangstemperatur wurde mittels DSC bestimmt. Es wurde hierfür ein Gerät Mettler DSC822$^e$ verwendet. 10 - 20 mg der Zusammensetzungen wurden jeweils in einen Aluminiumtiegel eingewogen. Nachdem die Probe

im DSC während 30 Min. bei 175°C gehärtet worden war, wurde die Probe auf 0°C abgekühlt und anschliessend mit einer Heizrate von 10°C/min bis 180°C aufgeheizt. Die Glasübergangstemperatur wurde mit Hilfe der DSC-Software aus der gemessenen DSC-Kurve bestimmt.

*E-Modul (DIN EN /SO 527)*

Eine Probe wurde zwischen zwei Teflonpapieren auf eine Schichtdicke von 2 mm verpresst. Anschliessend wurde die Probe während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima (23°C / 50 % relative Luftfeuchtigkeit) mit einer Zuggeschwindigkeit von 2 mm/min gemessen. Die Zugfestigkeit und der E-Modul wurde gemäss DIN EN ISO 527 bestimmt. Beim E-Modul wurde von 0.05 bis 0.25 % Dehnung bestimmt und in Tabelle 2 als E-Modul$_{0.05\text{-}0.25\%}$ ($EM_{0.05\text{-}0.25\%}$) angegeben.

*Zugscherfestigkeit (ZSF) (DIN EN 1465)*

Die Probekörper wurden aus den beschriebenen Beispiel-Zusammensetzungen und mit elektrolytisch verzinktem DC04 Stahl (eloZn) mit dem Mass 100 x 25 x 1.5 mm hergestellt, dabei betrug die Klebfläche 25 x 10 mm bei einer Schichtdicke von 2 mm. Gehärtet wurde 30 Min. bei 180°C. Die Zuggeschwindigkeit betrug 10mm/min.

Die Ergebnisse dieser Prüfungen sind in Tabelle 2 zusammengestellt. E-Modul, Zugscherfestigkeit und Glasübergangstemperatur wurden an Proben bestimmt, die 30 Minuten bei 180°C geschäumt wurden.

*Expansion*

Die Expansion (Exp) wurde aus der Differenz der Dichte des ungeschäumten Materials ($d_0$) und der Dichte des geschäumten Materials ($d_1$) ermittelt durch die Formel:

$$Exp = (d_0 - d_1) / d_1$$

Die Schäumung erfolgte bei einer Temperatur von 160°C bzw. 180°C.

Tabelle 2. Zusammensetzungen und Resultate.

| | *1* | *2* | *3* | *4* | *5* | *6* | *7* | *8* |
|---|---|---|---|---|---|---|---|---|
| Araldite® GT7004 [GT[1]] | 62.55 | 46.64 | 46.64 | 46.63 | 46.64 | 46.65 | 46.64 | 46.64 |
| Crylcoat® 1506-0 [GT[1]] | - | 30.32 | 30.32 | 30.32 | 30.32 | 30.32 | 30.31 | 30.31 |
| Crylcoat® 1680 [GT[1]] | 15.64 | - | - | - | - | - | - | - |
| Primid® XL 552 [GT[1]] | 1.07 | 3.03 | 3.03 | 3.04 | 3.03 | 3.04 | 3.03 | 3.04 |
| Dicyandiamide [GT[1]] | 1.19 | 0.89 | 0.88 | 0.89 | 0.89 | 0.89 | 0.89 | 0.89 |
| Aerosil® R202 [GT[1]] | 3.91 | 3.26 | 3.27 | 3.26 | 3.26 | 3.26 | 3.27 | 3.26 |
| GF 3mm [GT[1]] | 7.82 | 7.93 | 7.93 | 7.93 | 7.93 | 7.93 | 7.93 | 7.93 |
| Calciumcarbonat (Omyacarb®) [GT[1]] | 7.82 | 7.93 | 7.93 | 7.93 | 7.93 | 7.93 | 7.93 | 7.93 |
| Dyhard® UR500 [GT[1]] | - | - | 0.46 | 0.92 | 1.38 | 1.83 | 2.06 | 2.28 |
| *Summe* | *100.00* | *100.00* | *100.46* | *100.92* | *101.38* | *101.83* | *102.06* | *102.28* |
| *Exp* (160°C) [%] | 35 | 35 | 50 | 58 | 62 | 70 | 78 | 85 |
| *Exp* (180°C) [%] | 35 | 35 | 55 | 62 | 75 | 82 | 98 | 110 |
| $EM_{0.05\text{-}0.25\%}$ [MPa] | 1520 | 1200 | 1050 | 980 | 820 | 780 | 615 | n.b.[2] |
| *ZSF* [MPa] | 3.6 | 4.1 | 3.3 | 2.8 | 2.4 | 1.9 | 1.2 | 1.2 |

(fortgesetzt)

| | *1* | *2* | *3* | *4* | *5* | *6* | *7* | *8* |
|---|---|---|---|---|---|---|---|---|
| Glasübergangstemperatur [°C] | 84 | 84 | 85 | 86 | 86 | 86 | 85.5 | 84.5 |
| GT[1] = Gewichtsteile. n.b.[2]= nicht bestimmt | | | | | | | | |

Diese Beispiele zeigen, dass ohne Zusatz von Beschleuniger nur mässige Expansionen erhalten werden. Die theoretische Expansion mit 15.5 % Crylcoat® 1680 wäre rund 300% bezogen auf das gebildete Reaktionswasser. Dieser Wert lässt sich wie folgt herleiten:

15.5 g Crylcoat® 1680 entsprechen 0.0133 Mol Carboxylgruppen pro 100g Formulierung. Da pro Carboxylgruppe bei der Reaktion mit Hydroxyalkylamid 1 Mol Wasser gebildet wird, entsprechen die 0.0133 Mol gebildeten Wasserdampfes unter Annahme des molaren Gasvolumens von 22.4 l/Mol ein Gasvolumen von rund 297.5 ml. Ausgehend von einer Dichte der ungeschäumten Formulierung von etwa 100 g / 100 ml errechnet sich die theoretische Dichte nach vollständiger Schäumung auf 100 g / (100 ml + 297.5 ml). Somit ist unter Benutzung obiger Formel eine Expansion von 297 % berechenbar.

In den Vergleichsbeispielen ***1*** und ***2*** wird kein Beschleuniger auf Basis eines Harnstoffderivates bei ansonsten ähnlicher Zusammensetzung zugesetzt. Offensichtlich bleiben die Expansionswerte mit 35% deutlich hinter den Werten zurück, die unter Zusatz des Beschleunigers in den erfindungsgemäßen Beispielen ***3*** bis ***8*** erreicht werden (Expansion bis zu 110%).

Wie bereits oben ausgeführt, nimmt mit zunehmender Konzentration des Beschleunigers die Epoxidvernetzung und damit die Expansion zu. Denn durch die geringe Viskosität der Epoxidharzmatrix kann der durch die Kondensationsreaktion erzeugte Wasserdampf dann nicht mehr in relevantem Umfang ausdiffundieren und trägt insofern in vollem Umfang zur Expansion des Schaums bei.

Völlig überraschend wurde weiterhin gefunden, dass die erfindungsgemäße hitzehärtende Epoxidharzzusammensetzung unter den üblichen für die Hitzehärtung verwendeten Temperaturbedingungen zur Ausbildung eines Schaums mit hoher mechanischer Festigkeit, guter Glasfestigkeit und gutem Haftvermögen auf metallischen und nichtmetallischen Untergründen führt, wobei gleichzeitig auf die Verwendung der bekannten toxischen oder leicht entflammbaren Treibmittel vollständig verzichtet werden kann.

Die in Tabelle 2 enthaltenen Ergebnisse belegen dies deutlich. Die erzielten Werte für das E-Modul, die Zugscherfestigkeit sowie die Glasübergangstemperatur nehmen zwar mit zunehmendem Expansionsgrad der erfindungsgemäßen Zusammensetzungen (Beispiele ***3*** bis ***8***) ab, was aber alleine auf die Expansion selbst und die dadurch veränderten Eigenschaften des Schaums zurückzuführen ist. Die erzielten Werte sind jedoch mit denen konventioneller Schäume, die toxische oder leicht entflammbare Treibmittel verwenden, durchwegs vergleichbar.

**Patentansprüche**

1. Hitzehärtende Epoxidharzzusammensetzung enthaltend

   - mindestens ein Epoxid-Festharz **A1** mit durchschnittlich mehr als einer Epoxidgruppe pro Molekül;
   - gegebenenfalls mindestens ein Epoxid-Flüssigharz **A2** mit durchschnittlich mehr als einer Epoxidgruppe pro Molekül;
   - mindestens einen Härter **B** für Epoxidharze, welcher durch erhöhte Temperatur aktiviert wird;
   - mindestens eine Carbonsäure **C;**
   - mindestens ein Hydroxyalkylamid oder Hydroxyalkylharnstoff **H;** und
   - mindestens einen Beschleuniger **E** auf Basis eines Harnstoffderivates zur Aktivierung der Umsetzung der Komponenten **A1,** und gegebenenfalls **A2,** mit **B.**

2. Hitzehärtende Epoxidharzzusammensetzung gemäss Anspruch 1, **dadurch gekennzeichnet, dass** das Epoxid-Flüssigharz **A2** ausgewählt ist aus der Gruppe bestehend aus Diglycidylether von Bisphenol-A, Diglycidylether von Bisphenol-F, Diglycidylether von Bisphenol-A/F.

3. Hitzehärtende Epoxidharzzusammensetzung gemäss Anspruch 1 oder 2, **dadurch gekennzeichnet, dass** die

Carbonsäure **C** aus einer Di- oder Tricarbonsäure, oder einem amorphen mindestens difunktionellen Polymer mit Carboxylendgruppen und einem Molekulargewicht zwischen ungefähr 1'600 g/mol and ungefähr 5'000 g/mol ausgewählt ist.

**4.** Hitzehärtende Epoxidharzzusammensetzung gemäss Anspruch 3, **dadurch gekennzeichnet, dass** die Dicarbonsäure aus Bernsteinsäure, Adipinsäure, Sebacinsäure, Glutarsäure und Benzoldicarbonsäure ausgewählt ist.

**5.** Hitzehärtende Epoxidharzzusammensetzung gemäss einem der Ansprüche 1 bis 4, **dadurch gekennzeichnet, dass** der Härter **B** ein latenter Härter ist, welcher ausgewählt ist aus der Gruppe bestehend aus Dicyandiamid, Guanimin, Guanidin, Aminoguanidin und deren Derivaten sowie aromatischen oder aliphatischen Carbonsäurehydraziden.

**6.** Hitzehärtende Epoxidharzzusammensetzung gemäss einem der Ansprüche 1 bis 5, **dadurch gekennzeichnet, dass** der Beschleuniger **E** ausgewählt ist aus der Gruppe der substituierten Harnstoffe, insbesondere 3-(3-Chlor-4-methylphenyl)-1, 1-di-methylharnstoff (Chlortoluron), oder Phenyl-Dimethylharnstoffen, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-isoButyl-N',N'-dimethylharnstoff, 1,1'-(Hexan-1,6-diyl)bis(3,3'-dimethylharnstoff), oder das Produkt der Umsetzung eines aromatischen monomeren Diisocyanats, insbesondere 4,4'-Diphenyl-methylen-diisocyanat, mit einer aliphatischen Aminverbindung, insbesondere Dimethylamin ist.

**7.** Hitzehärtende Epoxidharzzusammensetzung gemäss einem der Ansprüche 1 bis 6, **dadurch gekennzeichnet, dass** der Anteil des Beschleunigers **E** so gewählt ist, dass die Onset-Temperatur der Reaktion zwischen Epoxid-Festharz **A1,** Epoxid-Flüssigharz **A2** und Härter **B,** gemessen durch DSC, um 35 - 60°C gesenkt wird.

**8.** Hitzehärtende Epoxidharzzusammensetzung gemäss Anspruch 7, **dadurch gekennzeichnet, dass** der Anteil des Beschleunigers E 0.3 - 5.0 Gew.-%, bevorzugt 1.0 - 3.0 Gew.-% am Gesamtgewicht der Zusammensetzung beträgt.

**9.** Hitzehärtende Epoxidharzzusammensetzung gemäss einem der Ansprüche 1 bis 8, **dadurch gekennzeichnet, dass** das Hydroxyalkylamid oder Hydroxyalkylharnstoff **H** ein Hydroxyalkylamid der Formel (VIII) ist

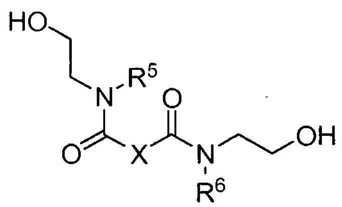

(VIII)

wobei X für eine Phenylengruppe oder für $-(CH_2)_n-$ mit n = 1-7 steht und $R^5$ und $R^6$ jeweils unabhängig voneinander für H oder eine Alkylgruppe mit 1 bis 5 Kohlenstoffatomen oder für $-CH_2CH_2-OH$ stehen.

**10.** Hitzehärtende Epoxidharzzusammensetzung gemäss einem der Ansprüche 1-9, **dadurch gekennzeichnet, dass** die Onset-Temperatur der Reaktion von Hydroxyalkylamid oder Hydroxyalkylharnstoff **H** mit Carbonsäure C, gemessen durch DSC, um wenigstens 20°C höher ist als die Onset-Temperatur der Reaktion zwischen Epoxid-Festharz **A1,** gegebenenfalls Epoxid-Flüssigharz **A2,** und Härter **B.**

**11.** Hitzehärtende Epoxidharzzusammensetzung gemäss einem der Ansprüche 1 bis 10, **dadurch gekennzeichnet, dass** die Reaktion zwischen dem Hydroxyalkylamid oder Hydroxyalkylharnstoff **H** und der Carbonsäure **C** Wasser freisetzt, welches als Treibmittel im Schäumprozess dient.

**12.** Verstärkungselement für die Verstärkung von metallischen Strukturen aufweisend einen Träger, auf welchem eine hitzehärtende Epoxidharzzusammensetzung gemäss einem der Ansprüche 1 bis 11 aufgebracht ist.

**13.** Verfahren zur Verklebung von hitzestabilen Substraten umfassend die Schritte

i) Applizieren einer hitzehärtenden Epoxidharzzusammensetzung gemäss einem der Ansprüche 1 bis 11 auf die Oberfläche eines hitzestabilen Substrates **S1,** insbesondere eines Metalls;

ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der hitzehärtenden Epoxidharzzusammensetzung auf eine Temperatur von 100 - 220 °C, insbesondere von 120 - 200 °C, bevorzugt zwischen 160 und 190 °C;

wobei das Substrat **S2** aus dem gleichen oder einem unterschiedlichen Material wie das Substrat **S1** besteht.

**14.** Verwendung einer Zusammensetzung gemäss einem der Ansprüche 1 bis 11 zum Verkleben oder Verstärken von Metallstrukturen oder verstärkendem Verfüllen von Hohlräumen im Fahrzeugbau oder Sandwichpanelbau.

**15.** Strukturschaum, erhalten durch Erhitzen einer hitzehärtenden Epoxidharzzusammensetzung nach einem der Ansprüche 1-11.

## Claims

**1.** Heat-curable epoxy resin composition containing

- at least one solid epoxy resin A1 having on average more than one epoxide group per molecule;
- optionally at least one liquid epoxy resin A2 having on average more than one epoxide group per molecule;
- at least one curing agent B for epoxy resins that is activated by elevated temperature;
- at least one carboxylic acid C;
- at least one hydroxyalkylamide or hydroxyalkylurea H; and
- at least one accelerator E based on a urea derivative for activating the reaction of components A1, and optionally A2, with B.

**2.** Heat-curable epoxy resin composition according to claim 1, **characterised in that** the liquid epoxy resin is selected from among diglycidyl ethers of bisphenol-A, diglycidyl ethers of bisphenol-F and diglycidyl ethers of bisphenol-A/F.

**3.** Heat-curable epoxy resin composition according to claim 1 or 2, **characterised in that** the carboxylic acid C is selected from among a di- or tricarboxylic acid, or an amorphous at least difunctional polymer having carboxyl terminal groups and a molecular weight of between approximately 1,600 g/mol and approximately 5,000 g/mol.

**4.** Heat-curable epoxy resin composition according to claim 3, **characterised in that** the dicarboxylic acid is selected from among succinic acid, adipic acid, sebacic acid, glutaric acid and benzenedicarboxylic acid.

**5.** Heat-curable epoxy resin composition according to one of claims 1 to 4, **characterised in that** the curing agent B is a latent curing agent which is selected from among dicyanodiamide, guanimine, guanidine, aminoguanidine and the derivatives thereof and aromatic or aliphatic carboxylic hydrazides.

**6.** Heat-curable epoxy resin composition according to one of claims 1 to 5, **characterised in that** the accelerator E is selected from among the substituted ureas, particularly 3-(3-chloro-4-methylphenyl)-1,1-dimethylurea (chlortoluron), or phenyl-dimethylureas, particularly p-chlorophenyl-N,N-dimethylurea (monuron), 3-phenyl-1,1-dimethylurea (fenuron), 3,4-dichlorophenyl-N,N-dimethylurea (diuron), N,N-dimethylurea, N-isobutyl-N',N'-dimethylurea, 1,1'-(hexane-1,6-diyl)bis(3,3')-dimethylurea), or the production of the reaction of an aromatic monomeric diisocyanate, particularly 4,4'-diphenyl-methylene-diisocyanate, with an aliphatic amine compound, particularly dimethylamine.

**7.** Heat-curable epoxy resin composition according to one of claims 1 to 6, **characterised in that** the proportion of the accelerator E is selected such that the onset temperature of the reaction between solid epoxy resin A1, liquid epoxy resin A2 and curing agent B, measured by DSC, is lowered by 35 - 60 °C.

**8.** Heat-curable epoxy composition according to claim 7, **characterised in that** the proportion of the accelerator E is 0.3 - 5.0 % by weight, preferably 1.0 - 3.0 % by weight of the total weight of the composition.

**9.** Heat-curable epoxy resin composition according to one of claims 1 to 8, **characterised in that** the hydroxyalkylamide or hydroxyalkylurea H is a hydroxyalkylamide of formula (VIII)

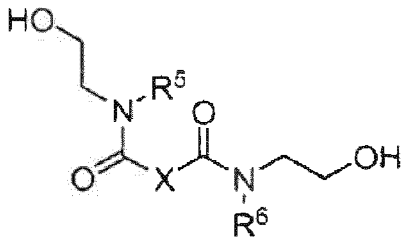

(VIII)

wherein X denotes a phenylene group of $-(CH_2)_n-$ where n = 1-7 and $R^5$ and $R^6$ each independently of one another denotes H or an alkyl group having 1 to 5 carbon atoms or $-CH_2CH_2-OH$.

**10.** Heat-curable epoxy resin composition according to one of claims 1 to 9, **characterised in that** the onset temperature of the reaction of hydroxyalkylamide or hydroxyalkylurea H with carboxylic acid C, measured by DSC, is at least 20 °C higher than the onset temperature of the reaction between solid epoxy resin A1, optionally liquid epoxy resin A2, and curing agent B.

**11.** Heat-curable epoxy resin composition according to one of claims 1 to 10, **characterised in that** the reaction between the hydroxyalkylamide or hydroxyalkylurea H and the carboxylic acid C liberates water that serves as propellant in the foaming process.

**12.** Reinforcing element for the reinforcement of metallic structures comprising a carrier on which a heat-curable epoxy resin composition according to one of claims 1 to 11 is applied.

**13.** Method of adhering heat-stable substrates, comprising the steps of

i) applying a heat-curable epoxy resin composition according to one of claims 1 to 11 to the surface of a heat-stable substrate S1, particularly a metal;
ii) bringing the heat-curable epoxy resin composition applied into contact with the surface of another heat-stable substrate S2, particularly a metal;
iii) heating the heat-curable epoxy resin composition to a temperature of 100 - 220°C, particularly from 120 - 200°C, preferably between 160 and 190°C;

the substrate S2 consisting of the same material as the substrate S1 or of a different material.

**14.** Use of a composition according to one of claims 1 to 11 for adhering or reinforcing metal structures or for the reinforcing filling of cavities in automobile construction or sandwich panel construction.

**15.** Structural foam obtained by heating a heat-curable epoxy resin composition according to one of claims 1 to 11.

## Revendications

**1.** Composition de résine époxy durcissant à la chaleur, contenant

- au moins une résine époxy solide A1 présentant en moyenne plus d'un groupe époxy par molécule ;
- éventuellement au moins une résine époxy liquide A2 présentant en moyenne plus d'un groupe époxy par molécule ;
- au moins un durcisseur B pour résine époxy, qui est activé par augmentation de la température ;
- au moins un acide carboxylique C ;
- au moins un hydroxyalkylamide ou une hydroxyalkylurée H ; et
- au moins un accélérateur E à base d'un dérivé d'urée pour l'activation de la réaction des composants A1 et éventuellement A2 avec B.

**2.** Composition de résine époxy durcissant à la chaleur selon la revendication 1, **caractérisée en ce que** la résine époxy liquide A2 est choisie dans le groupe comprenant le diglycidyléther de bisphénol A, le diglycidyléther de

bisphénol F, le diglycidyléther de bisphénol A/F.

3. Composition de résine époxy durcissant à la chaleur selon la revendication 1 ou 2, **caractérisée en ce que** l'acide carboxylique C est choisi parmi un acide di- ou tricarboxylique ou un polymère amorphe au moins difonctionnel comportant des groupes terminaux carboxyle et un poids moléculaire entre environ 1600 g/mole et environ 5000 g/mole.

4. Composition de résine époxy durcissant à la chaleur selon la revendication 3, **caractérisée en ce que** l'acide dicarboxylique est choisi parmi l'acide succinique, l'acide adipique, l'acide sébacique, l'acide glutarique et l'acide benzène-dicarboxylique.

5. Composition de résine époxy durcissant à la chaleur selon l'une des revendications 1 à 4, **caractérisée en ce que** le durcisseur B est un durcisseur latent qui est choisi dans le groupe comprenant le dicyandiamide, la guanimine, la guanidine, l'aminoguanidine et leurs dérivés et des hydrazides d'acide carboxylique aromatiques ou aliphatiques.

6. Composition de résine époxy durcissant à la chaleur selon l'une des revendications 1 à 5, **caractérisée en ce que** l'accélérateur E est choisi dans le groupe des urées substituées, en particulier la 3-(3-chloro-4-méthylphényl)-1,1-di-méthylurée (chlorotolurone) ou les phényl-diméthylurées, en particulier, la p-chlorophényl-N,N-diméthylurée (monurone), la 3-phényl-1,1-diméthylurée (fénurone), la 3,4-dichlorophényl-N,N-diméthylurée (diurone), la N,N-diméthylurée, la N-isobutyl-N',N'-diméthylurée, la 1,1'-(hexane-1,6-diyl)bis(3,3'-diméthylurée) ou le produit de la réaction d'un diisocyanate monomère aromatique, en particulier le 4,4'-diphénylméthylène-diisocyanate, avec un composé aminé aliphatique, en particulier la diméthylamine.

7. Composition de résine époxy durcissant à la chaleur selon l'une des revendications 1 à 6, **caractérisée en ce que** la proportion d'accélérateur E est choisie de telle sorte que la température de déclenchement de la réaction entre la résine époxy solide A1, la résine époxy liquide A2 et le durcisseur B, mesurée par DSC, est abaissée de 35 à 60 °C.

8. Composition de résine époxy durcissant à la chaleur selon la revendication 7, **caractérisée en ce que** la proportion d'accélérateur E est de 0,3 à 5,0 % en poids, de préférence de 1,0 à 3,0 % en poids du poids total de la composition.

9. Composition de résine époxy durcissant à la chaleur selon l'une des revendications 1 à 8, **caractérisée en ce que** l'hydroxyalkylamide ou l'hydroxyalkylurée H est un hydroxyalkylamide de formule (VIII)

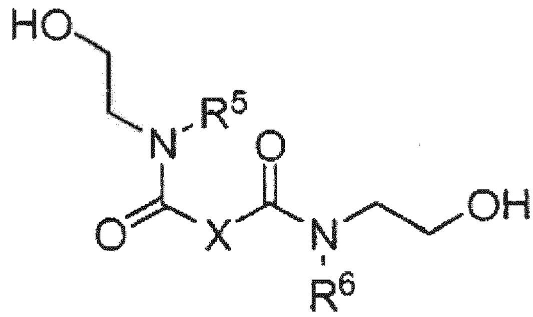

(VIII)

dans laquelle X représente un groupe phénylène ou-$(CH_2)_n$ où n = 1 à 7 et $R^5$ et $R^6$ sont respectivement, indépendamment l'un de l'autre, H ou un groupe alkyle comportant 1 à 5 atomes de carbone, ou $-CH_2CH_2-OH$.

10. Composition de résine époxy durcissant à la chaleur selon l'une des revendications 1 à 9, **caractérisée en ce que** la température de déclenchement de la réaction de l'hydroxyalkylamide ou l'hydroxyalkylurée H avec l'acide carboxylique C, mesurée par DSC est au moins de 20 °C supérieure à la température de déclenchement de la réaction entre la résine époxy solide A1, éventuellement la résine époxy fluide A2 et le durcisseur B.

11. Composition de résine époxy durcissant à la chaleur selon l'une des revendications 1 à 10, **caractérisée en ce que** la réaction entre l'hydroxyalkylamide ou l'hydroxyalkylurée H et l'acide carboxylique C libère de l'eau qui sert de propulseur dans le processus de moussage.

**12.** Elément de renforcement pour renforcer des structures métalliques présentant un support sur lequel une composition de résine époxy durcissant à la chaleur selon l'une des revendications 1 à 11 est appliquée.

**13.** Procédé de collage de substrats stables à la chaleur, comprenant les étapes

i) d'application d'une composition de résine époxy durcissant à la chaleur selon l'une des revendications 1 à 11 sur la surface d'un substrat stable à la chaleur S1, en particulier d'un métal;
ii) de mise en contact de la composition de résine époxy durcissant à la chaleur appliquée avec la surface d'un autre substrat stable à la chaleur S2, en particulier d'un métal;
iii) de chauffage de la composition de résine époxy durcissant à la chaleur à une température de 100 à 220 °C, en particulier de 120 à 200 °C, de préférence entre 160 et 190 °C,

le substrat S2 consistant en le même matériau ou un matériau différent du substrat S1.

**14.** Utilisation d'une composition selon l'une des revendications 1 à 11, pour le collage ou le renforcement de structures métalliques ou le remplissage renforcé d'espaces creux dans la construction automobile ou la construction de panneaux en sandwich.

**15.** Mousse structurée obtenue par chauffage d'une composition de résine époxy durcissant à la chaleur selon l'une des revendications 1 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6387470 B1
- WO 2004106402 A2
- WO 2004055092 A1


### In der Beschreibung aufgeführte Nicht-Patentliteratur


- **RÖMPP.** CD Römpp Chemie Lexikon, Version 1. Georg Thieme Verlag, 1995